# EUROPEAN PATENT SPECIFICATION

(11) **EP 1 242 165 B1**
(45) Date of publication and mention of the grant of the patent: **11.03.2009**
(21) Application number: 00947297.8
(22) Date of filing: 12.07.2000
(51) Int. Cl.: B01D 53/04, B01D 46/00, C01B 21/04

(54) **GAS PURIFICATION SYSTEM WITH AN INTEGRATED HYDROGEN SORPTION AND FILTER ASSEMBLY**
GASREINIGUNGSVORRICHTUNG MIT INTEGRIERTER SORPTIONS- UND FILTERVORRICHTUNG
SYSTEME DE PURIFICATION DE GAZ COMPORTANT UN DISPOSITIF INTEGRE DE FILTRE ET DE SORPTION D'HYDROGENE

(30) Priority: 12.07.1999 US 143377 P
(43) Date of publication of application: 25.09.2002
(73) Proprietor: SAES PURE GAS, INC., San Luis Obispo, CA 93401 (US)
(72) Inventor: ARQUIN, Piere, J., Arroyo Grande, CA 93420 (US); LINDAHL, Nels, W., San Luis Obispo, CA 93401 (US); CANAAN, Mark, A., San Luis Obispo, CA 93401 (US)
(74) Representative: Pistolesi, Roberto
(86) International application number: PCT/US2000/019044
(87) International publication number: WO 2001/003812

(56) References cited:
- WO-A-97/03745
- WO-A-99/19048
- US-A- 2 701 624
- US-A- 4 306 887
- US-A- 4 687 650
- US-A- 4 942 019
- US-A- 5 238 469
- US-A- 5 489 327
- US-A- 5 669 961
- US-A- 5 895 519
- US-A- 5 902 561
- US-A- 5 985 007
- PATENT ABSTRACTS OF JAPAN vol. 015, no. 068 (C-0807), 18 February 1991 (1991-02-18) & JP 02 293310 A (JAPAN PIONICS CO LTD), 4 December 1990 (1990-12-04)
- PATENT ABSTRACTS OF JAPAN vol. 010, no. 292 (C-376), 3 October 1986 (1986-10-03) & JP 61 107919 A (TAIYO SANSO KK), 26 May 1986 (1986-05-26)

## Description

### BACKGROUND OF THE INVENTION

The invention relates generally to gas purification systems for the purification of noble gases and nitrogen. In particular, the method of purification teaches heating an impure gas, contacting the impure gas with an impurity sorption material to produce a purified gas, cooling the purified gas to a temperature less than about 100° C, and contacting the purified gas with a hydrogen sorption material to remove residual hydrogen. The system teaches an improved, low temperature hydrogen sorption and filter apparatus for substantially removing all residual hydrogen and particles from the purified gas.

In the semiconductor manufacturing industry pure gases are used in a variety of manufacturing processes, such as chemical vapor deposition (CVD), plasma etch, etc. The purity of the gas used in the manufacturing process becomes more critical as the feature width of integrated circuits decreases. For example, more than a decade ago feature widths in the range of 3 to 5 µm were standard. Currently, integrated circuits having feature widths of less than 0.2 µm are in production. With smaller feature widths, even a very low level of contaminants can damage an integrated circuit, thereby destroying its functionality or degrading its performance. Typical contemporary process specifications require process gases to have less than 10 parts per billion (ppb) of contaminants, and preferably less than 1 ppb of contaminants.

One prior art gas purifier utilizes hot getter materials for the removal of impurities from noble gases and nitrogen. The getter materials are encased in stainless steel containers which are typically heated to a temperature in the range of 300° to 450° C. Unfortunately, stainless steel outgases a significant amount of hydrogen at temperatures above approximately 200° C. In the past when process specifications allowed 100 ppb of hydrogen in a purified process gas this was not a major problem. However, with contemporary process specifications, the hydrogen outgassed from hot stainless steel surfaces has become a significant problem.

A second vessel containing a hydrogen sorption material is typically used to remove the residual hydrogen. Briesacher et al. U.S. Pat. No. 5,238,469, issued August 24, 1993 (Briesacher) discloses a typical vessel containing a hydrogen sorption material. This vessel contains a material which will sorb hydrogen from the gas flow. A separate vessel of hydrogen sorption material adds size, complexity and cost to the gas purification systems.

In addition to purification of impure gas, the gas must also be filtered to remove particles. Particles as small as .003 µm and smaller must be removed from the gas flow. To remove particles, dedicated particle filters are added to the outlet sections of the gas purification systems. The material utilized for the filter element is typically Teflon, but other more expensive materials such as steel may be used.

Particle filters are very precise and expensive components of the gas purification systems. In addition to cost, particle filters also add complexity and physical size to the gas purification systems. Teflon filters are temperature sensitive and cannot be operated in environments above approximately 100° C. Teflon filters can be damaged or destroyed if operated above 100° C. Teflon filters may also be contaminated with moisture or water vapor. A damaged, destroyed or contaminated filter must be replaced.

What is needed is a gas purification system which reduces the complexity, cost and physical size for equivalent purification and particle filtration performance.

WO9919048 discloses a semiconductor manufacturing system includes a getter-based gas purifier coupled in flow communication with a gas distribution network for a semiconductor fabrication facility.
WO9703745 discloses a method and an apparatus for removing impurities from a noble gas or nitrogen uses a single purifier vessel having three different temperature zones.
JP61107919 discloses a process for obtaining high-purity gas at low cost by forming a getter layer in the lower inner part of a cylinder having an inlet of gas to be treated in the upper part and a refmed gas outlet in the lower part and arranging a heater in the upper inner space of the cylinder.

### SUMMARY OF THE INVENTION

The present invention provides fulfills the needs over the prior art. The present invention provides a gas purification system with improved efficiency, simpler construction, cost reductions, form factor improvements, and increased durability.

The present invention provides cost and form factor improvements through fewer components over all and through utilizing multiple integrated components. Prior art gas purification systems are more bulky and complicated.

The present invention achieves increased thermal efficiency through utilization of a regenerative heat exchanger to recapture a portion of the heat energy transferred to the gas during the purification process. Prior art purifiers lacked a regenerative heat exchanger.

Prior art gas purification systems utilized discrete heater and purification chambers where the present invention integrates the two components into one integrated heater and purification vessel assembly.

Prior art gas purification systems also utilized discrete residual hydrogen sorption and particle filtering components. The present invention integrates the two discrete components into one integrated hydrogen sorption and particle filter assembly. The integrated hydrogen sorption and particle filter assembly is also capable of operating at higher temperatures. This eases maintenance and manufacture.

The resulting gas purification system is simpler through utilizing fewer components, smaller by utilizing fewer and integrated components, and reduced cost through fewer components, smaller components and through reduced manufacture labor requirements.

### BRIEF DESCRIPTION OF THE DRAWINGS

Figure 1 illustrates a schematic of a heated getter, gas purification system in accordance with the present invention.
Figure 2 illustrates a getter vessel of a heated getter, gas purification system in accordance with the present invention.
Figure 2A illustrates an inlet end cap of Figure 2 in more detail in accordance with the present invention.
Figure 2B illustrates an outlet end cap of Figure 2 in more detail in accordance with the present invention.
Figure 2C illustrates a detailed view of an inlet end cap of a getter vessel of a heated getter, gas purification system in accordance with the present invention.
Figure 2D illustrates a detailed sectional view of inlet end of a getter vessel of a heated getter, gas purification system in accordance with the present invention.
Figure 2E illustrates a flow chart of the operation of a heated getter, gas purification system in accordance with the present invention.
Figure 3 illustrates an integrated, hydrogen sorption and particle filter assembly of a heated getter, gas purification system in accordance with the present invention.
Figure 4 illustrates a sectional view "A" of Figure 3.
Figure 5 illustrates a sectional view "B" of Figure 3.
Figure 6 illustrates a flow chart of an integrated circuit manufacturing apparatus utilizing a heated getter, gas purification system in accordance with the present invention.
Figure 7 illustrates a flow chart of a flat panel display manufacturing apparatus utilizing a heated getter, gas purification system in accordance with the present invention.

### DETAILED DESCRIPTION OF THE PREFERRED EMBODIMENTS

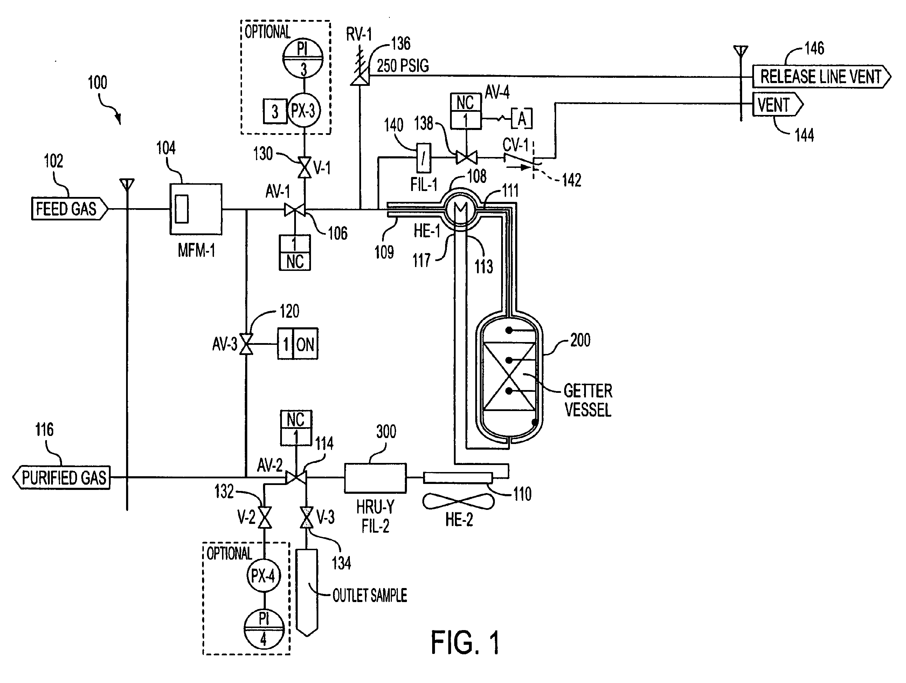

Figure 1 schematically illustrates a gas purification system 100 in accordance with one embodiment of the present invention. The gas purification system 100 includes an inlet 102, a mass flow meter 104, a first solenoid activated valve 106, a first heat exchanger assembly 108, a heated getter vessel 200 , a second heat exchange assembly 110, an integrated hydrogen sorption and particle filter assembly 300, a second solenoid activated valve 114, and an outlet 116. The system 100 also includes a bypass valve 120, an inlet option valve 130, an outlet option valve 132, an outlet sample valve 134, a pressure relief valve 136, a vent valve 138, a vent line filter 140, a vent line check valve 142, a vent outlet 144, and a relief line vent 146.

The interior surfaces of the gas purification system which may be contacted by a gas should be clean and well-polished. For example, the interior surfaces of all of the connecting tubing, the valves, and the various gas handling assemblies should be made of a polished, nonreactive metal having a sufficiently close grain to minimize gas adsorption. The desirable degree of smoothness of the polished metal surface should be between 5 and 25 microinch Ra. Appropriate metals which can provide such surfaces include stainless steel and industry-standard alloys such as hastelloy, incoloy, and monel, which are available from a variety of sources. Such metals are typically electropolished to provide the proper surface specifications, as is well known to those skilled in the art.

The heated getter vessel 200 may be made from any suitable material having sufficient strength and high temperature resistance, e.g., metallic materials. In a preferred embodiment, heated getter vessel 200 is made of stainless steel.

A source of impure gas is coupled to gas inlet 102. By impure gas, it is meant that the gas typically includes impurities in the range of 0.1-10 parts per million (ppm). While, these gases may be sufficiently pure for many applications, they are considered impure for the ultraclean processes required for semiconductor manufacturing. Examples of such impure gases include nitrogen or one of the noble gasses as provided by commercial gas companies such as Air Products Corporation of Allenstown, Pa. and Air Liquide of Chicago, III.

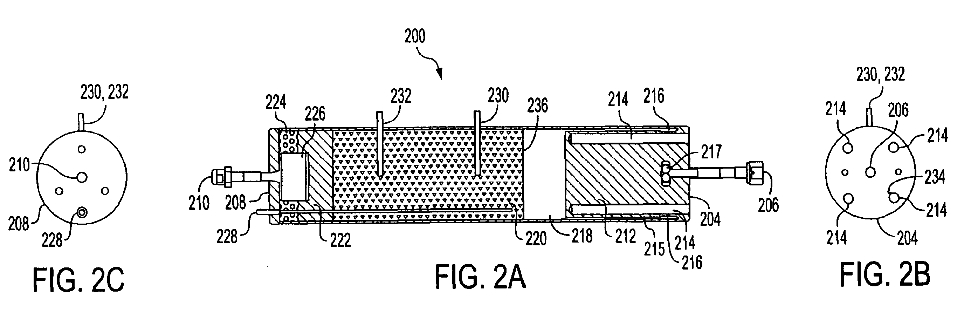

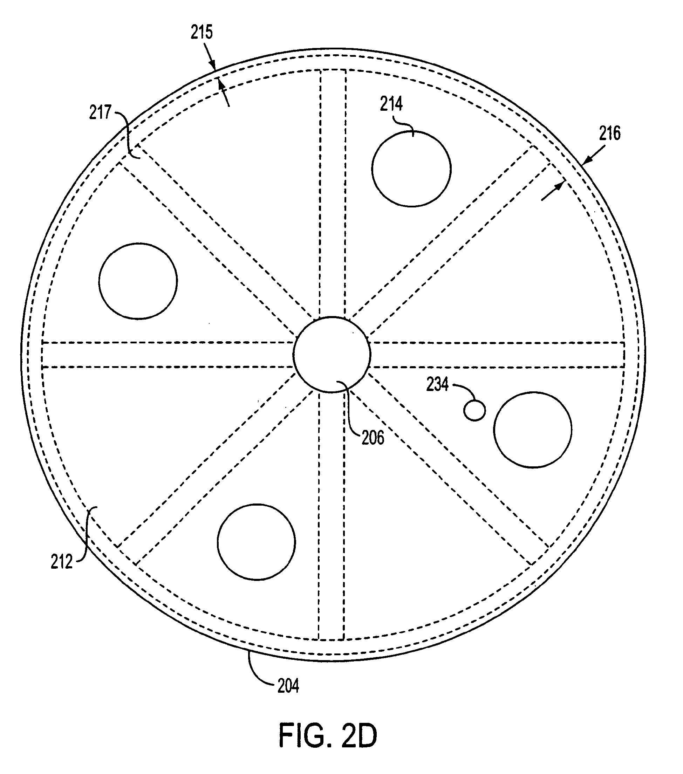

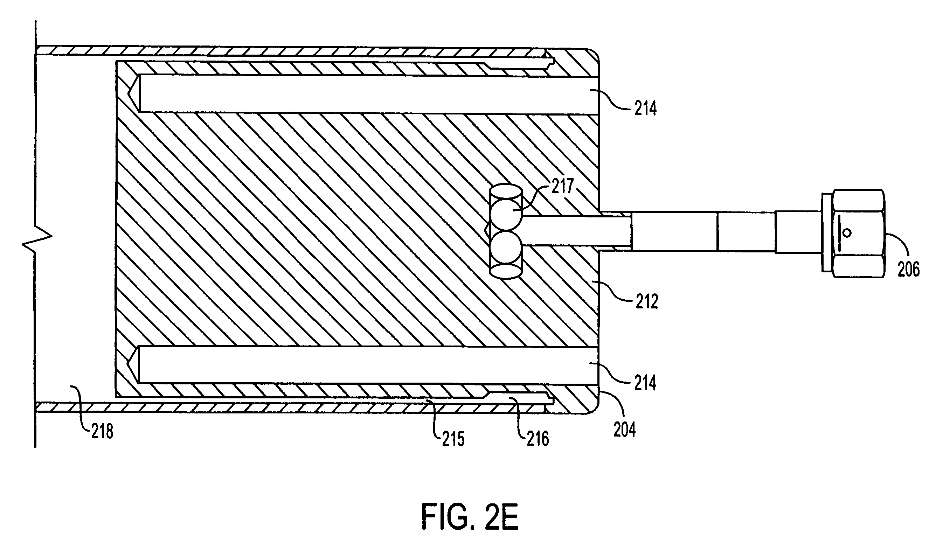

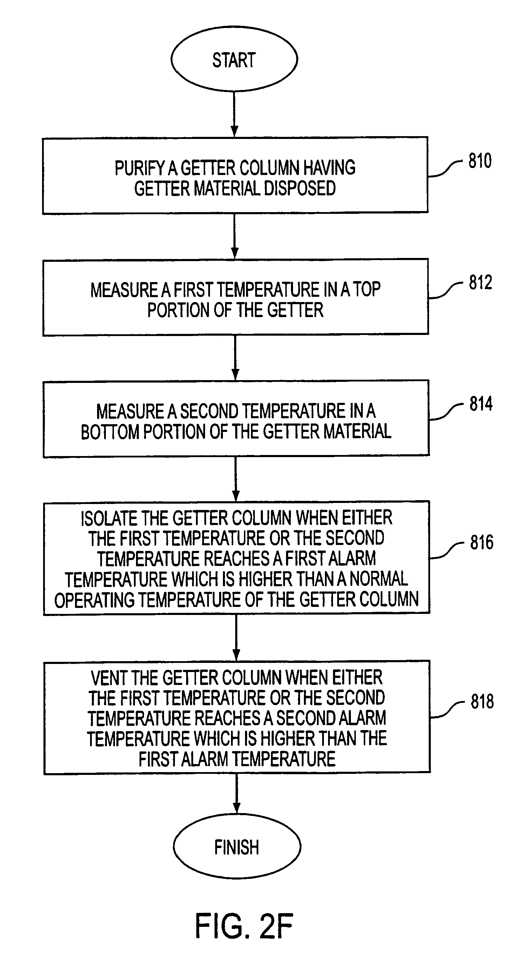

Mass flow meter 104 is coupled to inlet 102 by a length of tubing and is used to accurately monitor the amount of gas flowing through the gas purification system 100. Valve 106 is coupled to mass flow meter 104 by a length of tubing and is normally open during the operation of gas purification 100. The cool gas inlet 109 of the gas to gas heat exchanger 108 is coupled to the valve 106 by a length of tubing and is operative to heat the gas prior to its introduction into the integrated heater and getter assembly 200. The preheated gas outlet 111 of the gas to gas heat exchanger 108 is coupled to the inlet of the heated getter vessel 200 by a length of tubing. The detailed description of the components and the operation of the heated getter vessel 200 are discussed in more detail below in the discussion of Figure 2.

The outlet 210 of the heated getter vessel 200 is coupled to the heated gas inlet 113 of the gas to gas heat exchanger 108 by a length of tubing. The gas to gas heat exchanger 108 is operable to cool the heated gas from the outlet of the heated getter vessel 200 and transfer at least a portion of the energy in the heated gas to the impure gas. The precooled gas outlet 117 of the gas to gas heat exchanger 108 is coupled to the inlet of the gas to air heat exchanger 110 by a length of tubing. The gas to air heat exchanger 110 is operable to transfer thermal energy in the gas to air which is forced across the exterior surface of the gas to air heat exchanger 110.

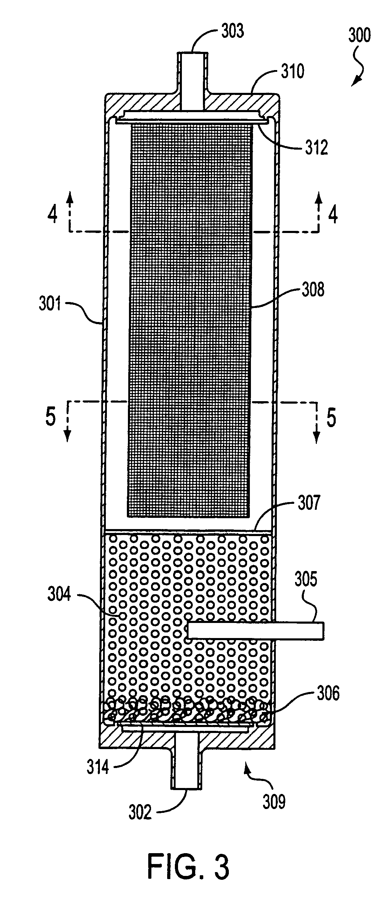

The outlet of the gas to air heat exchanger 110 is coupled to the inlet 302 of the integrated hydrogen sorption and particle filter assembly 300 by a length of tubing. The detailed description of the components and the operation of the integrated hydrogen sorption and particle filter assembly 300 are discussed in more detail below in the discussion of Figure 3. The outlet 303 of the integrated hydrogen sorption and particle filter assembly 300 is coupled to the second solenoid activated valve 114 by a length of tubing. The second solenoid activated valve 114 is coupled to the outlet 116 by a length of tubing.

Figure 2 illustrates the heated getter vessel 200. The heated getter vessel 200 preferably includes an elongated, cylindrical outer enclosure 202, a first end 204, an inlet 206 proximate to the first end 204, a second end 208, an outlet 210 proximate to the second end 208, a gas heater body 212, a plurality of heater elements 214, a first quantity of purification material 220, a second quantity of purification material 222, a quantity of shot 224, an outlet screen assembly 226, a first thermocouple 228, a second thermocouple 230, a third thermocouple 232, and a fourth thermocouple 234.

The first end 204 and second end 208 are preferably welded gas-tight to the elongated cylindrical outer enclosure 202. The inlet 206 is coupled to the annular volume 216 via a plurality of passages 217 which extend through the gas heater body 212. The heater elements 214 are coupled to an electrical power source (not shown) for heating the gas heater body 212. The gas heater body 212 is operable to heat the gas as the gas flows in the inlet 206, through the passages 217 to the first annular volume 216, then the second annular volume 215, to the unoccupied volume 218 between the gas heater body 212 and the first quantity of purification material 220.

The gas is heated as it flows through the plurality of passages 217 and the first annular volume 216 and second annular volume 215. The combination of the plurality of passages 217 and the first annular volume 216 and second annular volume 215 distributes the gas flow over the heated surfaces throughout the gas heater body 212. The temperature to which the gas is heated is generally greater than 200° C., and is preferably greater than 300° C., e.g. 300°C - 450° C. The operational efficiency of the preferred heated getter vessel 200 is greatly enhanced by heating the gas to these temperatures.

In a preferred embodiment the first quantity of purification material 220 is a getter material. Also in a preferred embodiment the second quantity of purification material 222 is a getter material.

Impurities are removed from the heated gas as the heated gas passes over the surface of, or contacts, the first quantity of getter 220. The impurities are chemically sorbed into the surface of the first quantity of getter 220. The gas released from the heated getter vessel 200 is therefore purified, and typically has less than 1-10 parts per billion (ppb) of contaminant gasses, other than residual hydrogen.

Unfortunately, the hot stainless steel surfaces of the heated getter vessel 200 and interconnecting tubing typically create 10-25 ppb of hydrogen.

The non-evaporable getter materials useful in the present invention are characterized by a sorption capacity for active gases. Examples of suitable metals for non-evaporable getters include, among others, zirconium, vanadium, iron. As disclosed in U.S. Pat. Nos. 3,203,901; 3,926,832; 4,071,335; 4,269,624; 4,306,887; 4,312,669; 4,405,487; and 4,907,948 (the disclosures of each of which is incorporated herein by reference) the manufacture and use of zirconium alloy getter materials are well known to those skilled in the art. The specific getter material used is chosen based upon the temperature range available, and upon the specific gas which is to be purified.

For example, if a noble gas is to be purified, the getter material can be an alloy of Zr--V-Fe. Such alloys generally have a weight composition such that the percentage of weight of the three elements when plotted on a ternary composition diagram lie with a polygon having as its corners defined by (a) 75% Zr--20% V--5% Fe; (b) 45% Zr--20% V--35% Fe; (c) 45% Zr--50% V--5% Fe. Such getter materials are described in U.S. Pat. No. 4,312,669. Preferably, a ternary alloy having a weight of Zr (70 wt. %)--V (24.6 wt. %)--Fe (5.4 wt. %) is used. Such alloys are available commercially in various forms as St707™ Getter Alloy (SAES GETTERS S.p.A., Milan, Italy).

A suitable getter material for purification of both noble gases and nitrogen is an alloy of Zr--Fe. Such alloys are known to the art, and preferably consists of from 15 to 30% by weight of Fe, and from 70 to 85% by weight Zr (as described by U.S. Pat. No. 4,306,887). An especially preferred getter material is an alloy of 84 wt. % zirconium and 16 wt. % aluminum. Such alloys are available commercially in various forms as St101T™ Getter Alloy (SAES GETTERS S.p.A., Milan, Italy).

The physical embodiment of the getter material is not critical. A variety of getter material forms are known to the art or are commercially available. For example, the getter material can consist of a multiplicity of small pellets. Alternatively, the getter material may be provided in powdered form, or as a surface coating on a ceramic substrate.

After the heated gas contacts the first quantity of getter 220, the heated gas flows over the surface of, or contacts, the second quantity of getter 222 and flows into the quantity of shot 224. The shot 224 provides a ferrous reactive mass to enhance safety features of the heated getter vessel 200.

Figures 2A illustrates the first end 204 of the heated getter vessel 200. The location of the inlet 206, the plurality of heater elements 214 and the fourth thermocouple 234 are shown.

Figure 2B illustrates the second end 208 of the heated getter vessel 200. The location of the outlet 210 and the first thermocouple 228 are shown.

Figure 2C illustrates a detailed view of the first end 204 of the heated getter vessel 200 . The inlet 206 the plurality of heater elements 214 and the fourth thermocouple 234 are shown. In addition, the plurality of passages 217 are also shown. The passages 217 may be in any convenient pattern, size and number. The inlet 206 may also be off center rather than centered on the first end 204. The passages are operable to provide additional heated surface area to be exposed to the gas flow as the gas flows to the first annular volume 216.

The first annular volume 216 is provided to transition and distribute the gas flow from the passages 217. As the gas flows into the first annular volume 216, the gas flow is spread into a thin layer to flow over the heated surfaces of the first annular volume 216 and second annular volume 215. The second annular volume further thins and distributes the gas flow over the heated surface of the gas heater body 212. The relative size and location of the first annular volume 216 and second annular volume 215 are shown.

Figure 2D illustrates a detailed sectional view of first end 204 of the heated getter vessel 200 . Figure 2D illustrates the length of the second annular volume 215 and the gas heater body 212.

A plurality heaters may be utilized. Heaters may also be in additional locations such as a resistive heater adjacent to and in contact with the of the heated getter vessel 200.

Getter columns are hazardous because the getter material contained therein is highly reactive with high concentrations of impurities. For example, in the event a high concentration, e.g., a few percent depending on the gas flow rate, of an impurity, e.g., oxygen, is introduced into a getter column containing a known zirconium-based getter material, an exothermic reaction occurs the heat from which may cause melting of the containment wall of the vessel. The containment wall, which is typically formed of stainless steel, may melt at temperatures as low as about 1,000° C because the getter material contacting the containment wall reacts therewith and forms a eutectic composition. If melting of the containment wall results in the formation of a hole therein, then breach of containment of the getter material occurs, which is potentially catastrophic.

The shot 224 is disposed around outlet screen assembly 226. The shot 224 may be any suitable material capable of protecting outlet screen assembly 226 from substantial damage, as will be explained in more detail later. Preferred shot 224 include, but are not limited to, metallic materials, e.g., stainless steel, and ceramic materials, e.g., quartz, SiC, SiN, and Al₂O₃. The shot 224 is preferably in the form of relatively small diameter particles having a substantially spherical shape, e.g., balls, or an assortment of generally cylindrical and generally spherical shapes, e.g., shot. In a preferred embodiment, shot 224 is comprised of stainless steel shot having a diameter of 0.125 inch to 0.25 inch.

The first thermocouple 228, second thermocouple 230 and third thermocouple 232 are temperature sensors disposed in first quantity of getter 220. The first thermocouple 228 is disposed in the heated getter vessel 200 so as to extend substantially through the first quantity of getter 220. The first thermocouple 228, second thermocouple 230 and third thermocouple 232 are coupled to a control unit (not shown), the operation of which will be described in more detail later.

In a preferred embodiment, first thermocouple 228, second thermocouple 230 and third thermocouple 232 are thermocouple elements. The use of fast-acting thermocouple elements with a thin sheath is preferred for quicker response time. The thermocouple elements may be disposed in a single sheath or in separate sheaths. Those skilled in the art will recognize that other temperature sensing devices, e.g., a platinum resistance temperature device (RTD) or a thermistor, also may be used.

In operation, preheated gas to be purified enters heated getter vessel 200 through inlet 206. The gas is preheated to a temperature in the range of from about 300° C to about 400° C by the gas heater body 212. The gas then flows through first quantity of getter 220, a second quantity of getter 222, a quantity of shot 224, and outlet screen assembly 226. Impurities are sorbed from the gas as the gas flows through first quantity of getter 220. The purified gas exits heated getter vessel 200 through outlet 210.

In the event gas which contains a high concentration of impurities, e.g., oxygen, nitrogen, or oxygen-containing gases such as CO, CO₂, and H₂O enters heated getter vessel 200 , an exothermic reaction occurs when the gas contacts the first quantity of getter 220 and/or the second quantity of getter 222. Such high impurity gas may enter heated getter vessel 200 through either inlet 206 or outlet 210. For example, high impurity gas may enter through inlet 206 if heated getter vessel 200 is inadvertently connected to an improper source of gas. High impurity gas may enter through outlet 210 as the result of backfeeding which may occur if gas facility lines for, e.g., argon and nitrogen, are cross-connected.

If high impurity gas enters through outlet 210, the quantity of shot 224 buffers the outlet screen assembly 226 from the melt zone area above it, thereby saving the outlet screen assembly 226 from destruction.

Barrier material 224 is disposed proximate to the outlet filter 226 and separates purification material 222 from the outlet filter 226. Barrier material 224 may be any suitable material capable of protecting the outlet filter 226 from substantial damage, as will be explained in more detail later. Preferred barrier materials include, but are not limited to, metallic materials, e.g., stainless steel, and ceramic materials, e.g., quartz, SiC, SiN, and Al₂O₃. The barrier material 224 is preferably in the form of relatively small diameter particles having a substantially spherical shape, e.g., balls, or an assortment of generally cylindrical and generally spherical shapes, e.g., shot. In a preferred embodiment, barrier material 224 is comprised of stainless steel shot having a diameter of 3.175 mm (0.125 inch) to 6.350 mm (0.25 inch).

Temperature sensor 228 is disposed in the first and second quantities of getter 222, 220. Temperature sensor 228 is a multiple element temperature sensor capable of sensing the temperature of the first quantity of getter 222 proximate to the outlet and a the temperature of the second quantity of getter 220. Temperature sensor 228 is coupled to control unit, the operation of which will be described in more detail later. In a preferred embodiment, temperature sensor 228 is a thermocouple element. The use of fast-acting thermocouple elements with a thin sheath is preferred for quicker response time. The thermocouple elements may be disposed in a single sheath or in separate sheaths. Those skilled in the art will recognize that other temperature sensing devices, e.g., a platinum resistance temperature device (RTD) or a thermistor, also may be used.

In operation, preheated gas to be purified enters heated getter vessel 200 through inlet 206. The gas is preheated to a temperature in the range of from about 300° C to about 400° C by a gas heater (shown in Figure 2D). The gas then flows through the first and second quantities of getter 222, 220, barrier material 224, and outlet filter 226. As the gas flows through the first and second quantities of getter 222, 220, the getter sorbs impurities from the gas. The purified gas exits heated getter vessel 200 through outlet 210.

In the event gas which contains a high concentration of impurities, e.g., oxygen, nitrogen, or oxygen-containing gases such as CO, CO₂, and H₂O enters heated getter vessel 200, an exothermic reaction occurs when the gas contacts the first and second quantities of getter 222, 220. Such high impurity gas may enter heated getter vessel 200 through either inlet 206 or outlet 210. For example, high impurity gas may enter through inlet 206 if heated getter vessel 200 is inadvertently connected to an improper source of gas. High impurity gas may enter through outlet 210 as the result of backfeeding which may occur if gas facility lines for, e.g., argon and nitrogen, are cross-connected.

The temperature sensor 228 is located at a point which is a distance D₁ below the top of first quantity of getter 220. The point at which temperature sensor 228 is located is selected to fall within a melt zone. As used in connection with the description of the invention, the term "melt zone" means the region in which the maximum temperature generated by the exothermic reaction between an impurity and the purification material occurs the fastest. It has been discovered that when high impurity gas enters heated getter vessel 200 through inlet 206 the maximum temperature generated by the exothermic reaction occurs the fastest below the top surface of the first quantity of getter 220. It is believed that the maximum temperature occurs below the top surface of the first quantity of getter 220 because the exothermic reaction is not instantaneous and because of the gas velocity of the incoming gas.

For normal flow rates, e.g., 1 cubic meter/hour/kilogram of purification material, the distance D₁ has been found to be about 25.40 mm (1 inch) for new purification material to about 63.50 mm (2.5 inches) for aged purification material. Thus, the melt zone moves deeper into the bed as the purification material ages. Furthermore, for lower gas flow rates, the distance D₁ may be slightly shorter because of the reduced gas velocity of the incoming gas. If the gas inlet provides for uniform distribution of the incoming gas, then the melt zone will normally be located in the center of the purification material. On the other hand, if the gas inlet provides for nonuniform distribution of the incoming gas, e.g., an annular distribution, then the melt zone may be offset from the center of the purification material.

Those skilled in the art will recognize that the location of the melt zone is a function of certain parameters including the geometry of the heated getter vessel e.g., the diameter and the length of the vessel, the gas flow rate, the type of impurity, and the age of the purification material. Depending on these parameters, it is believed that the melt zone may occur from just above 0 inch to about 6 inches below the top of the first quantity of getter 220. In a standard 5 inch diameter vessel at a normal gas flow rate, temperature sensor 228 is preferably located from just above 0 mm (0 inch) to just below 76.20 mm (3 inches) below the top surface of the first quantity of getter 220, with a more preferred range being from about 12.70 mm (0.5 inch) to about 63.50 mm (2.5 inches) and a most preferred range being from about 25.40 mm (1 inch) to about 50.80 mm (2 inches).

The lower portion of heated getter vessel 200 is configured to inhibit the formation of a eutectic composition between the getter material and either exterior wall of the heated getter vessel 200 or outlet filter 226 and to detect rapidly the onset of an exothermic reaction which indicates that excess impurities are being backfed into the heated getter vessel 200. Barrier material 224 separates the second quantity of getter 222 at the bottom of heated getter vessel 200 from outlet filter 226. The thickness D₂ of barrier material 224 is selected to protect outlet filter 226 from substantial damage by inhibiting the formation of a eutectic composition between the getter and outlet filter 226 so that such eutectic composition does not melt a hole through the outlet filter 226. When barrier material 224 is a layer of stainless steel shot, a thickness D₂ of about 1 inch has been found to be sufficient to protect outlet filter 226 from substantial damage.

Temperature sensor 228 has a second sensor element located at a point which is a distance D₃ above the bottom of the second quantity of getter 222. The point at which temperature sensor 228 is located is also selected to fall within a melt zone, i.e., the region in which the maximum temperature generated by the exothermic reaction between an impurity and the getter material occurs the fastest. It has been discovered that when high impurity gas enters heated getter vessel 200 through outlet 210, e.g., by backfeeding from a cross-connected gas facility line, the maximum temperature generated by the exothermic reaction occurs the fastest above the bottom surface of the second quantity of getter 222.

It is believed that the maximum temperature occurs above the bottom surface of the second quantity of getter 222 because the exothermic reaction is not instantaneous and because of the gas velocity of the incoming gas. In tests in which N₂ was backfed into a standard 5 inch diameter vessel at a gas flow rate of > 20 m³/hr, the distance D₃ has been found to be about 38.10 mm (1.5 inches) to about 50.80 mm (2 inches). As discussed above, the location of the melt zone depends on certain parameters including the geometry of the heated getter vessel, e.g., the diameter and the length of the vessel, the gas flow rate, and the type of impurity. Depending on these parameters, it is believed that the melt zone may occur from just above 0 mm (0 inch) to about 152.40 mm (6 inches) above the bottom of the second quantity of getter 222. In a standard 127 mm (5 inch) diameter vessel, temperature sensor 228 is preferably located from just above 0 mm (0 inch) to just below 76.20 mm (3 inches) above the bottom surface of the second quantity of getter 222, with a more preferred range being from about 12.70 mm (0.5 inch) to about 63.50 mm (2.5 inches) and a most preferred range being from about 25.40 mm (1 inch) to about 50.80 mm (2 inches).

Control unit measures the temperatures sensed by the temperature sensor 228 in heated getter vessel 200 and actuates, e.g., by air actuation, isolation valves 106 and 114, bypass valve 120, and vent valve 138 when certain alarm temperatures are reached or when a certain temperature increase rate is reached or when one of the temperature sensors is destroyed. When the temperature sensor is a thermocouple element, an open thermocouple indicates that the thermocouple element may have been destroyed. Control unit may be any electronic device capable of performing these functions, e.g., microprocessor, microcontroller, computer, or discrete logic, and may be coupled into the existing control computer for the getter-based gas purifier.

Control unit preferably has three alarm levels. At the first alarm level, which occurs when a first alarm temperature is measured or when a temperature increase rate is reached, control unit actuates isolation valves 106 and 114 to isolate heated getter vessel 200, i.e., to close off both the inlet and outlet of heated getter vessel 200, and opens bypass valve 120. At the second alarm level, which occurs when a second alarm temperature is measured, control unit actuates vent valve 138 to vent gas from heated getter vessel 200. At the third alarm level, which occurs when a third alarm temperature is reached, control unit closes bypass valve 138. The first alarm temperature is preferably about 10° C to about 100° C, more preferably about 40° C to about 60° C, and most preferably about 50° C, above a normal operating temperature of heated getter vessel 200.

The first alarm level action shuts down the exothermic reaction (if present) by isolating heated getter vessel 200. The second alarm temperature is preferably at least about 100° C above a normal operating temperature of heated getter vessel 200. A temperature increase of this magnitude is a reliable indicator that an exothermic reaction has reached a dangerous level. The second alarm level action vents gas to help release impurities and to protect heated getter vessel 200 from structural failure. Venting gas protects heated getter vessel 200 from structural failure by reducing the internal pressure, which is on the order of 7-10.5 bar (100-150 psig) in normal operation, within heated getter vessel 200 to prevent unsafe structural conditions due to the high temperatures (near 1000° C) from the melted purification material. Venting will also, in the case of the upper melt zone, flush out the impurities remaining in the inlet tubing with noble gas stored below the melt zone in the getter column. The second alarm level action vents as much gas as possible from heated getter vessel 200, e.g., down to about 0-0.35 bar (0-5 psig).

The third alarm temperature is preferably at least about 200° C, and more preferably at least about 300° C, above a normal operating temperature of heated getter vessel 200. A temperature increase of this magnitude is a reliable indicator that a substantial amount have excess impurities have been introduced into heated getter vessel 200. The third alarm level action shuts off the supply of gas to the gas distribution network for the semiconductor fabrication facility so that high impurity gas is not used in the production of integrated circuit devices. The time response to the alarm actions should be quick, e.g., within about .5 to 1.5 seconds, because the melting process can cause substantial damage in a matter of a few seconds. To reduce the time response to the alarm actions, the use of an individual solenoid valve for each of isolation valves 106 and 114, bypass valve 120, and vent valve 138 is preferred.

The normal operating temperature of a heated getter vessel 200 in an argon gas purifier is about 400° C. Accordingly, the first alarm temperature is preferably within a range of from about 410° C to about 500° C, more preferably within a range of from about 1140° C to about 1200° C, and most preferably about 450° C. The second alarm temperature is preferably at least about 500° C. The third alarm temperature is preferably at least about 600° C, and more preferably at least about 700° C.

In the event control unit measures a temperature at or above a first alarm temperature, control unit actuates isolation valves 106 and 114 to isolate heated getter vessel 200. When heated getter vessel 200 is isolated, the feed gas to be purified, which already has a high purity level, flows directly from source 102 to outlet 116 via bypass valve 120 so that the gas distribution network continues to be supplied with gas. In the event control unit measures a temperature at or above a second alarm temperature, control unit actuates vent valve 138 to vent gas from heated getter vessel 200. When vent valve 138 is actuated, gas flows from heated getter vessel 200 through particle filter 140, vent valve 138, check valve 142, and vent 144 to a gas cabinet which may form part of the gas distribution network. In the event control unit measures a temperature at or above a third alarm temperature, control unit closes bypass valve 120 to shut off the supply of gas to the gas distribution network. In addition to being configured to carry out alarm actions when certain temperatures are measured, control unit is preferably further configured to provide "upscale" protection. In other words, in the event control unit determines that a temperature sensor may have been destroyed, e.g., by detecting an open thermocouple, control unit assumes a maximum temperature, e.g., the third alarm temperature, has been reached and carries out the corresponding alarm actions.

Figure 2E is a flowchart of a method of protecting a getter column in accordance a preferred embodiment of the present invention. In step 810 a getter column having getter material disposed therein is provided. Heated getter vessel 200 described herein is an example of a getter column suitable for use in step 810. Those skilled in the art will recognize, however, that the method of the present invention is not limited to getter columns having the features of heated getter vessel 200. In step 812 a first temperature is measured in a top portion of the getter material. The first temperature may be measured by a control unit which is coupled to a temperature sensor disposed in the getter material as described above for heated getter vessel 200. The first temperature is preferably measured from just above 0 mm (0 inch) to just below 76.20 mm (3 inches) below the top of the getter material, with a preferred range being from about 12.70 mm (0.5 inch) to about 63.50 mm (2.5 inches), and a more preferred range being from about 25.40 mm (1 inch) to about 63.50 mm (2 inches). In step 814 a second temperature is measured in a bottom portion of the getter material. The second temperature may be measured in the same manner in which the first temperature is measured. The second temperature is preferably measured from just above 0 mm (0 inch) to just below 76.20 mm (3 inches) above the bottom of the getter material, with a preferred range being from about 12.70 mm (0.5 inch) to about 63.50 mm (2.5 inches), and a more preferred range being from about 25.40 mm (1 inch) to about 50.80 mm (2 inches).

In step 816 the getter column is isolated when either the first temperature or the second temperature reaches a first alarm temperature which is higher than a normal operating temperature of the getter column. The getter column may be isolated by actuating isolation valves which prevent gas from entering either the inlet or the outlet of the getter column. As described above, isolating the getter purifier shuts down the exothermic reaction which occurs when high impurity gas enters the getter column. The first alarm temperature is preferably about 10° C to about 100° C, more preferably about 40° C to about 60° C, and most preferably about 50° C, above a normal operating temperature of the getter column. In a preferred embodiment in which the getter column is part of an argon gas purifier, the normal operating temperature of the getter column is about 400° C. Accordingly, the first alarm temperature is preferably within a range of from about 410° C to about 500° C, more preferably within a range of from about 1140° C to about 1200° C, and most preferably about 450° C.

In step 818 the getter column is vented when either the first temperature or the second temperature reaches a second alarm temperature which is higher than the first alarm temperature. The getter column may be vented by actuating a vent valve which allows gas to flow out of the getter column. As described above, venting the getter column relieves the internal pressure therein, which is normally about 7-10.5 bar (100-150 psig). This prevents such internal pressure from forcing molten getter material against the containment wall of the getter column and reacting therewith to form a eutectic composition. Venting also helps rid the getter column of excess impurities. The second alarm temperature is preferably at least about 100° C above a normal operating temperature of the getter column. Accordingly, in the preferred embodiment in which the getter column is part of an argon gas purifier, the second alarm temperature is preferably at least about 500° C.

Figure 3 illustrates the integrated hydrogen sorption and particle filter assembly 300. The integrated hydrogen sorption and particle filter assembly 300 includes an elongated outer enclosure 301, a first end cap 309, an inlet 302 proximate to the first end cap 309, a second end cap 310, an outlet 303 proximate to the second end cap, a inlet screen 314, a quantity of shot 306, a quantity of hydrogen sorption material 304, a thermocouple 305, a screen 307, a plurality of filter elements 308, and a filter element mount plate 312.

The first end 309 and second end 310 are preferably welded gas-tight to the elongated outer enclosure 301. The outer enclosure 301, the first end cap 309 and the second end cap 310, define an inner volume. The inner volume contains the quantity of shot 306, the quantity of hydrogen sorption material 304, the thermocouple 305, the screen 307, the plurality of filter elements 308, the filter element mount plate 312, and the inlet screen 314. The inlet 302 is in fluid communication with the inner volume of the outlet enclosure 301.

Gas flows in the inlet 302 through the inlet screen 314 and the quantity of shot 306, to the quantity of hydrogen sorption material 304. The quantity of hydrogen sorption material 304 is operable to absorb the substantially all residual hydrogen from the gas. From the quantity of hydrogen sorption material 304, the gas flows through the screen 307, and through the plurality of filter elements 308. The plurality of filter elements 308 are operable to substantially trap all particles in the gas flow. From the filter elements, the purified, filtered gas flows out the outlet 303 to the outlet 116 of the gas purification system 100.

The hydrogen sorption material 304 is preferably a non-evaporative getter which is effective to remove hydrogen at temperatures below about 100° C., more generally less than about 60° C. Preferably, the hydrogen sorption material is used at temperatures ranging from ambient temperatures to about 40° C.

Hydrogen sorption materials are characterized by a sorption capacity for hydrogen gas. Examples of suitable hydrogen getters include, among others, zirconium, titanium, hafnium, uranium, thorium, vanadium, tungsten, tantalum, niobium, and alloys of these metals. A preferred subclass of hydrogen getter materials useful in the present invention are the zirconium alloys.

For example, the getter material can be an alloy of Zr--V--Fe for both noble gases and nitrogen. Such alloys generally have a weight composition such that the percentage of weight of the three elements when plotted on a ternary composition diagram lie with a polygon having as its corners defined by (a) 75% Zr--20% V--5% Fe; (b) 45% Zr--20% V--35% Fe; (c) 45% Zr-50% V--5% Fe. Such getter materials are described in U.S. Pat. No. 4,312,669. Preferably, a ternary alloy having a weight of Zr (70 wt. %)--V (24.6 wt. %)--Fe (5.4 wt. %) is used. Such alloys are available commercially in various forms as St707™ Getter Alloy (SAES GETTERS S.p.A., Milan, Italy).

If the gas to be purified is a noble gas or nitrogen, the getter material can be an alloy of Zr--Fe. Such alloys are known to the art, and preferably consists of from 15 to 30% by weight of Fe, and from 70 to 85% by weight Zr (described by U.S. Pat. No. 4,306,887). An especially preferred getter material is an alloy of 84 wt. % zirconium and 16 wt. % aluminum. Such alloys are available commercially in various forms as St101™ Getter Alloy (SAES GETTERS S.p.A., Milan, Italy).

In a preferred embodiment, the hydrogen sorption getter 304 is a ternary alloy having a weight of Zr (70 wt. %)--V (24.6 wt. %)--Fe (5.4 wt. %) is used. Such alloys are available commercially in various forms as St707™ Getter Alloy (SAES GETTERS S.p.A., Milan, Italy). Once sorbed, oxygen, carbon and nitrogen atoms cannot be released again by this hydrogen getter material, even at its melting point (1400° C +/-100° C), due to the formation of strong chemical bonds with the alloy atoms.

Hydrogen atoms, however, diffuse into the hydrogen sorption material bulk more quickly than other atoms and distribute almost uniformly within the bulk. Due to well-known equilibrium phenomena, hydrogen sorption capacity of these materials actually increases with decreasing temperatures. However, because of the relatively weak forces which bind these atoms to the hydrogen sorption material alloy, some of the hydrogen sorbed at a low temperature or at room temperature can be released at high temperatures. In other words, the hydrogen sorption is reversible and depends upon the hydrogen sorption material 340 temperature.

The temperature sensor 305 is provided in the integrated hydrogen sorption and particle filter assembly 300. The temperature sensor 305 monitors the temperature of the hydrogen sorption material 340. This provides easier activation and reactivation of the hydrogen sorption material 340 by providing a temperature sensor integral to the integrated hydrogen sorption and particle filter assembly 300. The temperature sensor is electrically coupled to the control unit. The temperature sensor 305 also monitors the temperature of the gas flowing through the integrated hydrogen sorption and particle filter assembly 300. If the temperature rises above an alarm temperature, the control unit may interrupt the flow through the integrated hydrogen sorption and particle filter assembly 300 by closing the inlet valve 106 and the outlet valve 114. The alarm temperature is preferably selected to be less than about 100° C.

Since the integrated hydrogen sorption and particle filter assembly 300 includes a metallic filter, the integrated hydrogen sorption and particle filter assembly 300 can be regenerated by heating the assembly above about 200° C. to drive off the hydrogen trapped in the hydrogen sorption getter 304. Hydrogen isotopes (D₂, T₂) are sorbed in the same way as normal hydrogen and present the same behavior.

Since the integrated hydrogen sorption and particle filter assembly 300 and the gas flowing through it are at temperatures below about 100° C., the stainless steel of its construction produces almost no contaminating hydrogen. Nonetheless, residual hydrogen in the purified gas flowing through the integrated hydrogen sorption and particle filter assembly 300 is effectively scavenged from the gas, because the hydrogen sorption getter 304 is effective even at room temperatures. The integrated hydrogen sorption and particle filter assembly 300 of the present invention has been found to reduce hydrogen in purified nitrogen gas from 10-25 ppb to less than 1 ppb.

The plurality of filter elements 308 in the integrated hydrogen sorption and particle filter assembly 300 are preferably manufactured from .003 µm sintered nickel material or stainless steel material. Such filter element materials are commercially available from Mott Filters of Farmington, CT. The metal filter elements 308 allow the integrated hydrogen sorption and particle filter assembly 300 to be regenerated without concern for damaging the temperature sensitive, Teflon filters of the prior art.

The integrated hydrogen sorption and particle filter assembly 300 also provides a form factor improvement over the prior art. In one prior art application the resulting previous desecrate components required an assembly over 508 mm (20 inches) in length. A properly sized integrated hydrogen sorption and particle filter assembly 300 was less than 330.20 mm (13 inches) in length.

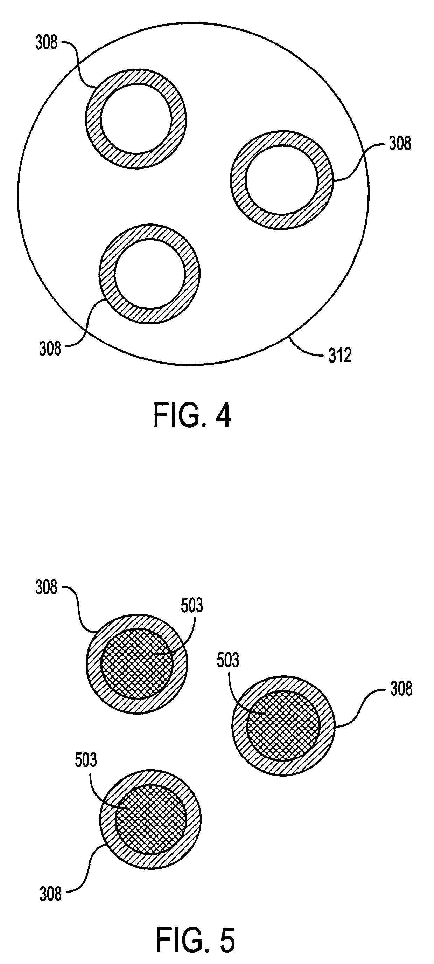

Figure 4 illustrates a section view of the plurality of filter elements 308 of Figure 3. Figure 4 shows the plurality of filter elements 308 and the filter element mount plate 312. The filters are assembled by first welding the filter elements 308 to the filter element mount plate 312, then welding the filter element mount plate 312 to the second end cap 310.

Figure 5 illustrates a section view of the plurality of filter elements 308 of Figure 3. Figure 5 shows the plurality of filter elements 308 and the filter element ends 503.

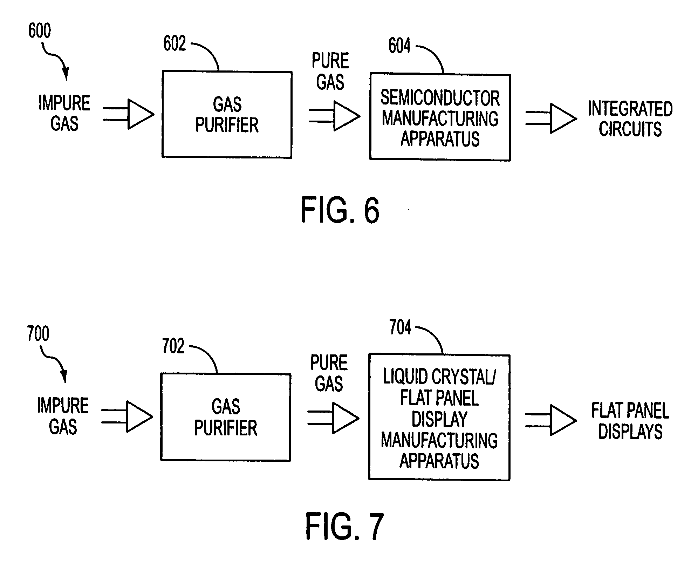

Figure 6 is a process flow chart showing utilizing a gas purification system 100 to purify an impure gas in block 602. The resulting pure gas is utilized in a semiconductor manufacturing apparatus and process in block 604 to manufacture integrated circuits.

Figure 7 is a process flow chart showing utilizing a gas purification system 100 to purify an impure gas in block 702. The resulting pure gas is utilized in a liquid crystal or flat panel display manufacturing apparatus and process in block 704 to manufacture flat panel displays.

While various embodiments have been described above, it should be understood that they have been presented by way of example only, and not limitation. Thus, the breadth and scope of a preferred embodiment should not be limited by any of the above described exemplary embodiments, but should be defined only in accordance with the following claims and their equivalents.

## Claims

1. A gas purification system (100) providing hydrogen sorption and particle filtering, said gas purification system (100) comprising:
a) a hydrogen sponge including hydrogen sorption material (304);
b) a particle filtering device comprised of a plurality of cylindrical filtering elements in parallel (308); and
c) an enclosure (301) having an inlet (302) and an outlet (303), said enclosure (301) housing said hydrogen sponge and particle filter device (300), said hydrogen sponge proximal to said inlet (302), said particle filter device being proximal to said outlet (303), said hydrogen sponge and particle filter device (300) arranged within said enclosure (301) such that a gas flowing into said enclosure (301) via said inlet (302) and out of said enclosure (301) via said outlet (303), must follow a flow path first contacting said hydrogen sorption material and then flowing through the particle filtering device.

2. A gas purification system (100) as recited in claim 1, wherein the particle filtering device is manufactured from a sintered metal.

3. A gas purification system (100) as recited in claim 1, wherein the particle filtering device is substantially capable of removing particles from said outlet gas flow as small as 0.003 µm.

4. A gas purification system (100) as recited in claim 2, wherein the particle filtering device is manufactured from at least one of: nickel, stainless steel.

5. A gas purification system (100) as recited in claim 1, wherein the hydrogen sorption material (304) is selected from the group consisting of: zirconium, palladium, platinum, rhodium, ruthenium, nickel, titanium and alloys thereof.

6. A gas purification system (100) as recited in claim 1, wherein the hydrogen sorption material (304) comprises a non-evaporative getter alloy selected from the group consisting of: zirconium-vanadium-iron alloys and zirconium-iron alloys.

7. A gas purification system (100) as recited in claim 1, further comprising a temperature measuring device (305).

8. A gas purification system (100) as recited in claims 1-7, comprising:
a) a system inlet (102) and a system outlet (116);
b) a gas to gas heat exchanger (108) having a cool gas inlet (109), a preheated gas outlet (111), a heated gas inlet (113) and a precooled gas outlet (117);
c) a heated getter vessel (200) having an inlet (206), an outlet (210) and a heat source (214);
d) a gas to air heat exchanger (110) having a precooled gas inlet and a cooled gas outlet;
e) an integrated hydrogen sorption and particle filter (300) having an inlet (302) and an outlet (303);
f) said system inlet (102) in fluid communication with said cool gas inlet (109) on said gas to gas heat exchanger (108);
g) said preheated gas outlet (111) on said gas to gas heat exchanger (108) in fluid communication with said inlet (206) on said heated getter vessel (200);
h) said outlet (210) on said heated getter vessel (200) in fluid communication with said heated gas inlet (109) on said gas to gas heat exchanger (108);
i) said precooled gas outlet (117) on said gas to gas heat exchanger (108) in fluid communication with said precooled gas inlet on said gas to air heat exchanger (110);
j) said cooled gas outlet on said gas to air heat exchanger (110) in fluid communication with said inlet (302) on said integrated hydrogen sorption and particle filter (300); and
k) said outlet (303) on said integrated hydrogen sorption and particle filter (300) in fluid communication with said system outlet (116).

9. A gas purification system (100) as recited in claim 8, wherein said heated getter vessel (200) includes:
a) a gas heating device;
b) a quantity of gas purification material (220);
c) a quantity of barrier material (224);
d) an enclosure (202) having an inlet (206) and an outlet (210), said enclosure (202) housing said gas purification material (220) and said gas heating device, said gas heating device proximal to the inlet (206), said barrier material proximal to said outlet (210), said gas purification material (220) disposed between said gas heating device and said barrier material (224), said gas heating device, gas purification material (220) and said barrier material (224) arranged within said enclosure (202) such that a gas flowing into said enclosure (202) via said inlet (206) and out of said enclosure (202) via said outlet (210), must follow a flow path first through said gas heating device, then contacting said gas purification material (220) and then flowing through said barrier material (224).

10. A method for purifying a gas, the method suitable for purifying gas to a level of purity sufficient for semiconductor manufacturing, the method comprising the acts of:
a) cooling the gas to less than 100 degrees C.
b) flowing the gas under pressure into a gas purification system enclosure (301) via an inlet (302);
c) contacting said gas under pressure with a hydrogen sponge disposed within said gas purification system enclosure (301);
d) flowing said gas through a particle filtering device comprised of a plurality of cylindrical filter elements in parallel disposed within said gas purification system enclosure (301); and
e) flowing said gas out of said gas purification system enclosure (301) via an outlet (303).

11. A method for purifying a gas as recited in claim 10, wherein the particle filtering device is manufactured from a sintered metal.

12. A method for purifying a gas as recited in claim 10, wherein the particle filtering device is substantially capable of removing particles from said outlet gas flow as small as 0.003 µm.

13. A method for purifying a gas as recited in claim 11, wherein the particle filtering device is manufactured from at least one of nickel, stainless steel.

14. A method for purifying a gas as recited in claim 10, wherein the hydrogen sorption material (304) is selected from the group consisting of: zirconium, palladium, platinum, rhodium, ruthenium, nickel, titanium and alloys thereof.

15. A method for purifying a gas as recited in claim 10, wherein the hydrogen sorption material (304) comprises a non-evaporative getter alloy selected from the group consisting of: zirconium-vanadium-iron alloys and zirconium-iron alloys.

16. A method for purifying a gas as recited in claim 10, further comprising the act of monitoring the temperature of the hydrogen sorption material (304).

17. A heated getter vessel (200) comprising:
a) a gas heating device;
b) a quantity of gas purification material (220);
c) a quantity of barrier material (224);
d) an enclosure (202) having an inlet (206) and an outlet (210), said enclosure (202) housing said gas purification material (220) and said gas heating device, said gas heating device proximal to the inlet (206), said barrier material (224) proximal to said outlet (210), said gas purification material (220) disposed between said gas heating device and said barrier material (224), said gas heating device, gas purification material (220) and said barrier material (224) arranged within said enclosure (202) such that a gas flowing into said enclosure (202) via said inlet (206) and out of said enclosure (202) via said outlet (210), must follow a flow path first through said gas heating device, then contacting said gas purification material (220) and then flowing through said barrier material (224);
and wherein the gas heating device includes:
e) a gas heater body (212);
f) a heat source (214);
g) a plurality of gas passages (217);
h) a first annular volume (216);
i) a second annular volume (215), wherein, said gas heater body (212), said plurality of gas passages (217), said first annular volume (216) and said second annular volume (215) are arranged within said getter vessel (200) such that said gas heater body (212) defines said first and said second annular volumes (216)(215), said plurality of gas passages (217) are in fluid communication with said inlet (206) and said first annular volume (216), said first annular volume (216) is in fluid communication with said second annular volume (215), said second annular volume (215) is in fluid communication with an internal volume (218) defined by said getter vessel enclosure (202), such that a gas flowing into said enclosure (202) via said inlet (206) flows from said inlet (206) then through said plurality of gas passages (217), then through said first annular volume (216), then through said second annular volume (215) and exits said gas heating device into said getter vessel enclosure (202).

18. A heated getter vessel (200) as recited in claim 17, wherein said heat source (214) includes a plurality of heat sources.

19. A heated getter vessel (200) as recited in claim 18, wherein said plurality of heat sources includes at least one heat source in contact with at least a portion of the gas heater body (212).

20. A heated getter vessel (200) as recited in claim 18, wherein said plurality of heat sources includes at least one heat source in contact with at least a portion of the getter vessel enclosure (202).

21. A heated getter vessel (200) as recited in claim 17, wherein said quantity of gas purification material (220) includes a plurality of types of gas purification material.

22. A heated getter vessel (200) as recited in claim 17, wherein the gas purification material (220) is selected from the group consisting of: zirconium, palladium, platinum, rhodium, ruthenium, nickel, titanium and alloys thereof.

23. A heated getter vessel (200) as recited in claim 17, wherein the gas purification material (220) comprises a non-evaporative getter alloy selected from the group consisting of: zirconium-vanadium-iron alloys and zirconium-iron alloys.

24. A heated getter vessel (200) as recited in claim 17, wherein said quantity of barrier material (224) includes a quantity of stainless steel shot.

25. A heated getter vessel (200) as recited in claim 17 further comprising a temperature sensor (228) disposed in a portion of said purification material.

26. A heated getter vessel (200) as recited in claim 25, wherein said temperature sensor (228) is operable to detect a temperature rise of 10 degrees per millisecond.

27. A heated getter vessel (200) as recited in claim 17, further comprising an outlet filter (226) proximal to outlet (210) of said getter vessel (200).

28. A heated getter vessel (200) as recited in claim 27, wherein said outlet filter (226) includes at least one of: a sintered stainless steel filter, a sintered Nickel filter.

29. A heated getter vessel (200) as recited in claim 27, wherein said outlet filter (226) includes at least one of: a disk shaped filter, a cylindrical shaped filter.

## Patentansprüche

1. Gasreinigungssystem (100), das eine Wasserstoffsorption und eine Partikelfilterung bereitstellt, wobei das Gasreinigungssystem (100) aufweist:
a) einen Wasserstoffschwamm, der ein Wasserstoffsorptionsmaterial (304) enthält;
b) eine Partikelfiltervorrichtung, die aus mehreren parallelen zylinderförmigen Filterelementen (308) besteht; und
c) ein Gehäuse (301) mit einem Einlass (302) und einem Auslass (303), wobei das Gehäuse (301) den Wasserstoffschwamm und die Partikelfiltervorrichtung (300) unterbringt, wobei sich der Wasserstoffschwamm proximal zum Einlass (302) befindet, wobei sich die Partikelfiltervorrichtung proximal zum Auslass (303) befindet, wobei der Wassserstoffschwamm und die Partikelfiltervorrichtung (300) im Gehäuse (301) derart angeordnet sind, dass ein Gas, das über den Einlass (302) in das Gehäuse (301) und über den Auslass (303) aus dem Gehäuse (301) strömt, einem Strömungsweg folgen muss, der zuerst mit dem Wasserstoffsorptionsmaterial in Kontakt tritt und dann durch die Partikelfiltervorrichtung läuft.

2. Gasreinigungssystem (100) nach Anspruch 1, wobei die Partikelfiltervorrichtung aus einem gesinterten Metall hergestellt ist.

3. Gasreinigungssystem (100) nach Anspruch 1, wobei die Partilcelfiltervorrichtung im Wesentlichen dazu fähig ist, Partikel aus dem Auslassgasstrom zu entfernen, die so klein wie 0,003 µm sind.

4. Gasreinigungssystem (100) nach Anspruch 2, wobei die Partikelfiltervorrichtung aus Nickel und/oder Edelstahl hergestellt ist.

5. Gasreinigungssystem (100) nach Anspruch 1, wobei das Wasserstoffsorptionsmaterial (304) aus der Gruppe gewählt ist, die aus Zirconium, Palladium, Platin, Rhodium, Ruthenium, Nickel, Titan und Legierungen davon besteht.

6. Gasreinigungssystem (100) nach Anspruch 1, wobei das Wasserstoffsorptionsmaterial (304) eine nicht verdampfende Getterlegierung umfasst, die aus der Gruppe gewählt ist, welche aus Zirconium-Vanadium-Eisen-Legierungen und Zirconium-Eisen-Legierungen besteht.

7. Gasreinigungssystem (100) nach Anspruch 1, ferner umfassend eine Temperaturmessvorrichtung (305).

8. Gasreinigungssystem (100) nach den Ansprüchen 1 bis 7, umfassend:
a) einen Systemeinlass (102) und einen Systemauslass (116);
b) einen Gas-Gas-Wärmeaustauscher (108) mit einem Einlass (109) für kühles Gas, einem Auslass (111) für vorerhitztes Gas, einem Einlass (113) für erhitztes Gas und einem Auslass (117) für vorgekühles Gas;
c) ein beheiztes Gettergefäß (200) mit einem Einlass (206), einem Auslass (210) und einer Wärmequelle (214);
d) einen Gas-Luft-Wärmeaustauscher (110) mit einem Einlass für vorgekühltes Gas und einem Auslass für gekühltes Gas;
e) einen integrierten Wasserstoffsorptions- und Partikelfilter (300) mit einem Einlass (302) und einem Auslass (303);
f) wobei der Systemeinlass (102) in einer Fließverbindung mit dem Einlass (109) für kühles Gas am Gas-Gas-Wärmeaustauscher (108) steht;
g) wobei der Auslass (111) für vorerhitztes Gas am Gas-Gas-Wärmeaustauscher (108) in einer Fließverbindung mit dem Einlass (206) am beheizten Gettergefäß (200) steht;
h) wobei der Auslass (210) am beheizten Gettergefäß (200) in einer Fließverbindung mit dem Einlass (109) für erhitztes Gas am Gas-Gas-Wärmeaustauscher (108) steht;
i) wobei der Auslass (117) für vorgekühltes Gas am Gas-Gas-Wärmeaustauscher (108) in einer Fließverbindung mit dem Einlass für vorgekühltes Gas am Gas-Luft-Wärmeaustauscher (110) steht;
j) wobei der Auslass für gekühltes Gas am Gas-Luft-Wärmeaustauscher (110) in einer Fließverbindung mit dem Einlass (302) am integrierten Wasserstoffsorptions- und Partikelfilter (300) steht; und
k) wobei der Auslass (303) am integrierten Wasserstoffsorptions- und Partikelfilter (300) in einer Fließverbindung mit dem Systemauslass (116) steht.

9. Gasreinigungssystem (100) nach Anspruch 8, wobei das beheizte Gettergefäß (200) aufweist:
a) eine Gaserhitzungsvorrichtung;
b) eine Menge eines Gasreinigungsmaterials (220);
c) eine Menge eines Barrierenmaterials (224);
d) ein Gehäuse (202) mit einem Einlass (206) und einem Auslass (210), wobei das Gehäuse (202) das Gasreinigungsmaterial (220) und die Gaserhitzungsvorrichtung unterbringt, wobei sich die Gasreinigungsvorrichtung proximal zum Einlass (206) befindet, wobei sich das Barrierenmaterial proximal zum Auslass (210) befindet, wobei das Gasreinigungsmaterial (220) zwischen der Gaserhitzungsvorrichtung und dem Barrierenmaterial (224) angeordnet ist, wobei die Gaserhitzungsvorrichtung, das Gasreinigungsrnaterzal (220) und das Barrierenmaterial (224) derart im Gehäuse (202) angeordnet sind, dass ein Gas, das über den Einlass (206) in das Gehäuse (202) und über den Auslass (210) aus dem Gehäuse (202) strömt, einem Strömungsweg folgen muss, der zuerst durch die Gaserhitzungsvorrichtung verläuft, dann mit dem Gasreinigungsmaterial (220) in Kontakt tritt und dann durch das Barrierenmaterial (224) läuft.

10. Verfahren zum Reinigen eines Gases, wobei das Verfahren dazu geeignet ist, Gas bis zu einem Reinheitsgrad zu reinigen, der zur Halbleiterherstellung geeignet ist, wobei das Verfahren die folgenden Vorgänge umfasst:
a) Kühlen des Gases auf weniger als 100 Grad C;
b) Führen des Gases unter Druck über einen Einlass (302) in ein Gasreinigungssystemgehäuse (301);
c) In-Kontakt-Bringen des Gases unter Druck mit einem Wasserstoffschwamm, der im Gasreinigungssystemgehäuse (301) angeordnet ist;
d) Führen des Gases durch eine Partikelfiltervorrichtung, bestehend aus mehreren parallelen zylinderförmigen Filterelementen, die im Gasreinigungssystemgehäuse (301) angeordnet ist; und
e) Führen des Gases über einen Auslass (303) aus dem Gasreinigungssystemgehäuse (301).

11. Verfahren zum Reinigen eines Gases nach Anspruch 10, wobei die Partikelfiltervorrichtung aus einem gesinterten Metall hergestellt ist.

12. Verfahren zum Reinigen eines Gases nach Anspruch 10, wobei die Partikelfiltervorrichtung im Wesentlichen dazu fähig ist, Partikel aus dem Auslassgasstrom zu entfernen, die so klein wie 0,003 µm sind.

13. Verfahren zum Reinigen eines Gases nach Anspruch 11, wobei die Partikelfiltervorrichtung aus Nickel und Edelstahl hergestellt ist.

14. Verfahren zum Reinigen eines Gases nach Anspruch 10, wobei das Wasserstoffsorptionsmaterial (304) aus der Gruppe gewählt ist, die aus Zirconium, Palladium, Platin, Rhodium, Ruthenium, Nickel, Titan und Legierungen davon besteht.

15. Verfahren zum Reinigen eines Gases nach Anspruch 10, wobei das Wasserstoffsorptionsmaterial (304) eine nicht verdampfende Getterlegierung umfasst, die aus der Gruppe gewählt ist, welche aus Zirconium-Vanadium-Eisen-Legierungen und Zirconium-Eisen-Legierungen besteht.

16. Verfahren zum Reinigen eines Gases nach Anspruch 10, ferner umfassend den Vorgang des Überwachens der Temperatur des Wasserstoffsorptionsmaterials (304).

17. Beheiztes Gettergefäß (200), umfassend:
a) eine Gaserhitzungsvorrichtung;
b) eine Menge eines Gasreinigungsmaterials (220);
c) eine Menge eines Barrierenmaterials (224);
d) ein Gehäuse (202) mit einem Einlass (206) und einem Auslass (210), wobei das Gehäuse (202) das Gasreinigungsmaterial (220) und die Gaserhitzungsvorrichtung unterbringt, wobei sich die Gasreinigungsvorrichtung proximal zum Einlass (206) befindet, wobei sich das Barrierenmaterial (224) proximal zum Auslass (210) befindet, wobei das Gasreinigungsmaterial (220) zwischen der Gaserhitzungsvorrichtung und dem Barrierenmaterial (224) angeordnet ist, wobei die Gaserhitzungsvorrichtung, das Gasreinigungsmaterial (220) und das Barrierenmaterial (224) derart im Gehäuse (202) angeordnet sind, dass ein Gas, das über den Einlass (206) in das Gehäuse (202) und über den Auslass (210) aus dem Gehäuse (202) strömt, einem Strömungsweg folgen muss, der zuerst durch die Gaserhitzungsvorrichtung verläuft, dann mit dem Gasreinigungsmaterial (220) in Kontakt tritt und dann durch das Barrierenmaterial (224) läuft;
und wobei die Gaserhitzungsvorrichtung aufweist:
e) einen Gaserhitzerkörper (212);
f) eine Wärmequelle (214);
g) mehrere Gasdurchgänge (217);
h) einen ersten ringförmigen Raum (216);
i) einen zweiten ringförmigen Raum (215), wobei der Gaserhitzerkörper (212), die mehreren Gasdurchgänge (217), der erste ringförmige Raum (216) und der zweite ringförmige Raum (215) derart im Gettergefäß (200) angeordnet sind, dass der Gaserhitzerkörper (212) den ersten und den zweiten ringförmigen Raum (216) (215) begrenzt, die mehreren Gasdurchgänge (217) in einer Fließverbindung mit dem Einlass (206) und dem ersten ringförmigen Raum (216) stehen, der erste ringförmige Raum (216) in einer Fließverbindung mit dem zweiten ringförmigen Raum (215) steht, der zweite ringförmige Raum (215) in einer Fließverbindung mit einem inneren Raum (218) steht, der durch das Gettergefäßgehäuse (202) begrenzt ist, so dass ein Gas, das über den Einlass (206) in das Gehäuse (202) strömt, von diesem Einlass (206) dann durch die mehreren Gasdurchgänge (217), dann durch den ersten ringförmigen Raum (216), dann durch den zweiten ringförmigen Raum (215) strömt und die Gaserhitzungsvorrichtung in das Gettergefäßgehäuse (202) verlässt.

18. Beheiztes Gettergefäß (200) nach Anspruch 17, wobei die Wärmequelle (214) mehrere Wärmequellen beinhaltet.

19. Beheiztes Gettergefäß (200) nach Anspruch 18, wobei die mehreren Wärmequellen zumindest eine Wärmequelle in Kontakt mit zumindest einem Teil des Gaserhitzerkörpers (212) beinhalten.

20. Beheiztes Gettergefäß (200) nach Anspruch 18, wobei die mehreren Wärmequellen zumindest eine Wärmequelle in Kontakt mit zumindest einem Teil des Gettergefäßgehäuses (202) umfassen.

21. Beheiztes Gettergefäß (200) nach Anspruch 17, wobei die Menge des Gasreinigungsmaterials (220) mehrere Arten von Gasreinigungsmaterialien beinhaltet.

22. Beheiztes Gettergefäß (200) nach Anspruch 17, wobei das Gasreinigungsmaterial (220) aus der Gruppe gewählt ist, die aus Zirconium, Palladium, Platin, Rhodium, Ruthenium, Nickel, Titan und Legierungen davon besteht.

23. Beheiztes Gettergefäß (200) nach Anspruch 17, wobei das Gasreinigungsmaterial (220) eine nichtverdampfende Getterlegierung umfasst, die aus der Gruppe gewählt ist, welche aus Zirconium-Vanadium-Eisen-Legierungen und Zirconium-Eisen-Legierungen besteht.

24. Beheiztes Gettergefäß (200) nach Anspruch 17, wobei die Menge des Barrierenmaterials (224) eine Menge an Edelstahlschrotkugeln beinhaltet.

25. Beheiztes Gettergefäß (200) nach Anspruch 17, ferner umfassend einen Temperatursensor (228), der in einem Teil des Reinigungsmaterials angeordnet ist.

26. Beheiztes Gettergefäß (200) nach Anspruch 25, wobei der Temperatursensor (228) dazu betriebsfähig ist, einen Temperaturanstieg von 10 Grad pro Millisekunde festzustellen.

27. Beheiztes Gettergefäß (200) nach Anspruch 17, ferner umfassend einen Auslassfilter (226) proximal zum Auslass (210) des Gettergefäßes (200).

28. Beheiztes Gettergefäß (200) nach Anspruch 27, wobei der Auslassfilter (226) einen gesinterten Edelstahlfilter und/oder einen gesinterten Nickelfilter beinhaltet.

29. Beheiztes Gettergefäß (200) nach Anspruch 27, wobei der Auslassfilter (226) einen scheibenförmigen Filter und/oder einen zylinderförmigen Filter beinhaltet.

## Revendications

1. Système de purification de gaz (100) assurant la sorption d'hydrogène et la filtration de particules, ledit système de purification de gaz (100) comprenant :
a) une éponge à hydrogène comprenant un matériau de sorption d'hydrogène (304) ;
b) un dispositif de filtration de particules composé d'une pluralité d'éléments de filtration cylindriques en parallèle (308) ; et
c) une enceinte (301) ayant une admission (302) et un refoulement (303), ladite enceinte (301) logeant ladite éponge à hydrogène et le dispositif de filtration de particules (300), ladite éponge à hydrogène étant à proximité de ladite admission (302), ledit dispositif de filtration de particules étant à proximité dudit refoulement (303), ladite éponge à hydrogène et ledit dispositif de filtration de particules (300) étant agencés à l'intérieur de ladite enceinte (301) de telle sorte qu'un gaz circulant à l'intérieur de ladite enceinte (301) via ladite admission (302) et vers l'extérieur de ladite enceinte (301) via ledit refoulement (303), doit suivre un chemin d'écoulement en venant tout d'abord en contact avec ledit matériau de sorption d'hydrogène puis en circulant à travers le dispositif de filtration de particules.

2. Système de purification de gaz (100) selon la revendication 1, dans lequel le dispositif de filtration de particules est fabriqué à partir d'un métal fritté.

3. Système de purification de gaz (100) selon la revendication 1, dans lequel le dispositif de filtration de particules est sensiblement capable d'éliminer des particules dudit écoulement de gaz de refoulement aussi petites que 0,003 µm.

4. Système de purification de gaz (100) selon la revendication 2, dans lequel le dispositif de filtration de particules est fabriqué à partir d'au moins un élément parmi le nickel et l'acier inoxydable.

5. Système de purification de gaz (100) selon la revendication 1, dans lequel le matériau de sorption d'hydrogène (304) est choisi dans le groupe consistant en le zirconium, le palladium, le platine, le rhodium, le ruthénium, le nickel, le titane et leurs alliages.

6. Système de purification de gaz (100) selon la revendication 1, dans lequel le matériau de sorption d'hydrogène (304) comprend un alliage de getter non évaporatif choisi dans le groupe consistant en les alliages de zirconium-vanadium-fer et les alliages de zirconium-fer.

7. Système de purification de gaz (100) selon la revendication 1, comprenant en outre un dispositif de mesure de température (305).

8. Système de purification de gaz (100) selon l'une des revendications 1 à 7, comprenant :
a) une admission de système (102) et un refoulement de système (116) ;
b) un échangeur de chaleur gaz à gaz (108) ayant une admission de gaz de refroidissement (109), un refoulement de gaz préchauffé (111), une admission de gaz chauffée (113) et un refoulement de gaz prérefroidi (117) ;
c) une cuve de getter chauffée (200) ayant une admission (206), un refoulement (210) et une source de chaleur (214) ;
d) un échangeur de chaleur gaz à air (110) ayant une admission de gaz prérefroidie et un refoulement de gaz refroidi ;
e) une sorption d'hydrogène et un filtre à particules intégrés (300) ayant une admission (302) et un refoulement (303) ;
f) ladite admission de système (102) étant en communication de fluide avec ladite admission de gaz de refroidissement (109) sur ledit échangeur de chaleur gaz à gaz (108) ;
g) ledit refoulement de gaz préchauffé (111) sur ledit échangeur de chaleur gaz à gaz (108) étant en communication de fluide avec ladite admission (206) sur ladite cuve de getter chauffée (200) ;
h) ledit refoulement (210) sur ladite cuve de getter chauffée (200) étant en communication de fluide avec ladite admission de gaz chauffée (109) sur ledit échangeur de chaleur gaz à gaz (108) ;
i) ledit refoulement de gaz prérefroidi (117) sur ledit échangeur de chaleur gaz à gaz (108) étant en communication de fluide avec ladite admission de gaz prérefroidie sur ledit échangeur de chaleur gaz à air (110) ;
j) ledit refoulement de gaz refroidi sur ledit échangeur de chaleur gaz à air (110) étant en communication de fluide avec ladite admission (302) sur ladite sorption d'hydrogène et ledit filtre à particules intégrés (300) ; et
k) ledit refoulement (303) sur ladite sorption d'hydrogène et ledit filtre à particules intégrés (300) étant en communication de fluide avec ledit refoulement de système (116).

9. Système de purification de gaz (100) selon la revendication 8, dans lequel ladite cuve de getter chauffée (200) comprend :
a) un dispositif de chauffage de gaz ;
b) une quantité de matériau de purification de gaz (220) ;
c) une quantité de matériau barrière (224) ;
d) une enceinte (202) ayant une admission (206) et un refoulement (210), ladite enceinte (202) logeant ledit matériau de purification de gaz (220) et ledit dispositif de chauffage de gaz, ledit dispositif de chauffage de gaz étant à proximité de l'admission (206), ledit matériau barrière étant à proximité dudit refoulement (210), ledit matériau de purification de gaz (220) étant disposé entre ledit dispositif de chauffage de gaz et ledit matériau barrière (224), ledit dispositif de chauffage de gaz, ledit matériau de purification de gaz (220) et ledit matériau barrière (224) étant agencés au sein de ladite enceinte (202) de telle sorte qu'un gaz circulant dans ladite enceinte (202) via ladite admission (206) et vers l'extérieur de ladite enceinte (202) via ledit refoulement (210), doit suivre un chemin d'écoulement tout d'abord à travers ledit dispositif de chauffage de gaz, puis venir en contact avec ledit matériau de purification de gaz (220) puis circuler à travers ledit matériau barrière (224).

10. Procédé de purification d'un gaz, le procédé étant approprié pour un gaz à purifier à un niveau de pureté suffisant pour la fabrication de semi-conducteurs, le procédé comprenant les étapes consistant à :
a) refroidir le gaz à moins de 100 degrés C ;
b) faire circuler le gaz sous pression dans une enceinte de système de purification de gaz (301) via une admission (302) ;
c) mettre en contact ledit gaz sous pression avec une éponge à hydrogène disposée dans l'enceinte de système de purification de gaz (301) ;
d) faire circuler ledit gaz à travers un dispositif de filtration de particules composé d'une pluralité d'éléments de filtration cylindriques en parallèle, disposé à l'intérieur de ladite enceinte de système de purification de gaz (301) ; et
e) faire circuler le gaz vers l'extérieur de ladite enceinte de système de purification de gaz (301) via un refoulement (303).

11. Procédé de purification d'un gaz selon la revendication 10, dans lequel le dispositif de filtration de particules est fabriqué à partir d'un métal fritté.

12. Procédé de purification d'un gaz selon la revendication 10, dans lequel le dispositif de filtration de particules est sensiblement capable d'éliminer des particules dudit écoulement de gaz de refoulement aussi petites que 0,003 µm.

13. Procédé de purification d'un gaz selon la revendication 11, dans lequel le dispositif de filtration de particules est fabriqué à partir d'au moins un élément parmi le nickel et l'acier inoxydable.

14. Procédé de purification d'un gaz selon la revendication 10, dans lequel le matériau de sorption d'hydrogène (304) est choisi dans le groupe consistant en le zirconium, le palladium, le platine, le rhodium, le ruthénium, le nickel, le titane et leurs alliages.

15. Procédé de purification d'un gaz selon la revendication 10, dans lequel le matériau de sorption d'hydrogène (304) comprend un alliage de getter non évaporatif choisi dans le groupe consistant en les alliages de zirconium-vanadium-fer et les alliages de zirconium-fer.

16. Procédé de purification d'un gaz selon la revendication 10, comprenant en outre l'étape de surveillance de la température du matériau de sorption d'hydrogène (304).

17. Cuve de getter chauffée comprenant :
a) un dispositif de chauffage de gaz ;
b) une quantité de matériau de purification de gaz (220) ;
c) une quantité de matériau barrière (224) ;
d) une enceinte (202) ayant une admission (206) et un refoulement (210), ladite enceinte (202) logeant ledit matériau de purification de gaz (220) et ledit dispositif de chauffage de gaz, ledit dispositif de chauffage de gaz étant à proximité de l'admission (206), ledit matériau barrière (224) étant à proximité dudit refoulement (210), ledit matériau de purification de gaz (220) étant disposé entre ledit dispositif de chauffage de gaz et ledit matériau barrière (224), ledit dispositif de chauffage de gaz, ledit matériau de purification de gaz (220) et ledit matériau barrière (224) étant agencés à l'intérieur de ladite enceinte (202) de telle sorte qu'un gaz circulant dans ladite enceinte (202) via ladite admission (206) et vers l'extérieur de ladite enceinte (202) via ledit refoulement (210), doit suivre un chemin d'écoulement tout d'abord à travers ledit dispositif de chauffage de gaz, puis venir en contact avec ledit matériau de purification de gaz (220) puis circuler à travers ledit matériau barrière (224) ;
et dans lequel le dispositif de chauffage de gaz comprend :
e) un corps de chauffage de gaz (212) ;
f) une source de chaleur (214) ;
g) une pluralité de passages de gaz (217) ;
h) un premier volume annulaire (216) ;
i) un second volume annulaire (215) dans lequel ledit corps de chauffage de gaz (212), ladite pluralité de passages de gaz (217), ledit premier volume annulaire (216) et ledit second volume annulaire (215) sont agencés à l'intérieur de ladite cuve de getter (200) de telle sorte que ledit corps de chauffage de gaz (212) définit ledit premier et ledit second volumes annulaires (216) (215), ladite pluralité de passages de gaz (217) étant en communication de fluide avec ladite admission (206) et ledit premier volume annulaire (216), ledit premier volume annulaire (216) étant en communication de fluide avec ledit second volume annulaire (215), ledit second volume annulaire (215) étant en communication de fluide avec un volume interne (218) défini par ladite enceinte de cuve de getter (202), de telle sorte qu'un gaz circulant dans ladite enceinte (202) via ladite admission (206) circule à partir de ladite admission (206) puis à travers ladite pluralité de passages de gaz (217), puis à travers ledit premier volume annulaire (216), puis à travers ledit second volume annulaire (215) et sort dudit dispositif de chauffage de gaz vers l'intérieur de ladite enceinte de cuve de getter (202).

18. Cuve de getter chauffée (200) selon la revendication 17, dans laquelle ladite source de chaleur (214) comprend une pluralité de sources de chaleur.

19. Cuve de getter chauffée (200) selon la revendication 18, dans laquelle ladite pluralité de sources de chaleur comprend au moins une source de chaleur en contact avec au moins une partie du corps de chauffage de gaz (212).

20. Cuve de getter chauffée (200) selon la revendication 18, dans laquelle ladite pluralité de sources de chaleur comprend au moins une source de chaleur en contact avec au moins une partie de l'enceinte de cuve de getter (202).

21. Cuve de getter chauffée (200) selon la revendication 17, dans laquelle ladite quantité de matériau de purification de gaz (220) comprend une pluralité de types de matériau de purification de gaz.

22. Cuve de getter chauffée (200) selon la revendication 17, dans laquelle le matériau de purification de gaz (220) est choisi dans le groupe consistant en le zirconium, le palladium, le platine, le rhodium, le ruthénium, le nickel, le titane et leurs alliages.

23. Cuve de getter chauffée (200) selon la revendication 17, dans laquelle le matériau de purification de gaz (220) comprend un alliage de getter non évaporatif choisi dans le groupe consistant en les alliages de zirconium-vanadium-fer et les alliages de zirconium-fer.

24. Cuve de getter chauffée (200) selon la revendication 17, dans laquelle ladite quantité de matériau barrière (224) comprend une quantité de grenaille d'acier inoxydable.

25. Cuve de getter chauffée (200) selon la revendication 17, comprenant en outre un capteur de température (228) disposé dans une partie dudit matériau de purification.

26. Cuve de getter chauffée (200) selon la revendication 25, dans laquelle ledit capteur de température (228) est opérationnel pour détecter une élévation de température de 10 degrés par milliseconde.

27. Cuve de getter chauffée (200) selon la revendication 17, comprenant en outre un filtre de refoulement (226) à proximité du refoulement (210) de ladite cuve de getter (200).

28. Cuve de getter chauffée (200) selon la revendication 27, dans laquelle ledit filtre de refoulement (226) comprend au moins un élément parmi un filtre en acier inoxydable fritté et un filtre en nickel fritté.

29. Cuve de getter chauffée (200) selon la revendication 27, dans laquelle ledit filtre de refoulement (226) comprend au moins un élément parmi un filtre en forme de disque et un filtre de forme cylindrique.
